# EUROPEAN PATENT SPECIFICATION

(11) **EP 1 775 203 B1**
(45) Date of publication and mention of the grant of the patent: **29.04.2009**
(21) Application number: 06076880.1
(22) Date of filing: 13.10.2006
(51) Int. Cl.: B62D 53/06, B62D 21/20, B60P 1/64, B62D 25/06, B60R 11/00, B60R 13/02, B60R 13/06, B62D 65/02

(54) **Semitrailer**
Sattelanhänger
Semi-remorque

(30) Priority: 13.10.2005 NL 1030190
(43) Date of publication of application: 18.04.2007
(73) Proprietor: Logi-d B.V., 3572 EG Utrecht (NL); van Britsom, Rony, 2980 Sint Antonius Zoersel (BE)
(72) Inventor:
(74) Representative: van Loon, C.J.J.

(56) References cited:
- US-A- 2 986 408
- US-A- 3 410 576
- US-A- 3 837 673
- US-A- 4 132 326
- US-A- 4 586 578

## Description

The invention relates to a semitrailer for road transport, comprising a loading platform with at least one wheel set, and a truck coupling provided on a short side of the semitrailer for cooperation with a truck.

Such semitrailers are generally known and are often used.

The loading platform may then be part of a fixed superstructure, such as a container or tank, but may also be part of a container chassis for transporting, for instance, ISO standardized freight containers.

Of course, with use of the semitrailer on the public road, stringent requirements are imposed on the axle load and the pressure exerted by the semitrailer on the truck via the truck coupling.

In order to carry out the transport as efficiently as possible, haulers often take different loads which have different destinations.

Thus, a tank semitrailer may be provided with a front and a rear tank for different liquids which are to be delivered at different places. With a fixed superstructure, for instance first a part of the load can be unloaded which is then replaced by a lighter load, such as returned packings. With a container chassis, for instance two twenty-foot containers can be placed on the semitrailer which are to be emptied at different places or are to be unloaded and replaced by an empty return container.

It will be clear that, as a result of the loading and unloading during a transport route, in the meantime the axle load and the pressure exerted by the coupling can vary greatly. As a result, the hauler is often forced to have its transport run according to a particular route, for instance a route where the heavier load is placed more in front and the lighter load is placed more at the rear on the semitrailer, and where the rear lighter load is unloaded first.

In a number of cases, the load then needs to be unloaded temporarily and be put back again. An example thereof is the above-mentioned semitrailer with fixed superstructure where return packings are received in the rear part. These return packings need to be unloaded first before the load located more in front can be reached from the dock shelter via the rear loading doors. Then, the old and the new return packings need to be loaded. Further, the chassis often needs to be slid in or pulled out to set axle load and coupling pressure. US 4 132 326 discloses a semitrailer according to the preamble of claim 1. A disadvantage of this trailer is that it is difficult to meet the roading requirements for both axle pressure and maneuverability for normal road transport on public roads.

The invention contemplates a semitrailer for road transport with which above-mentioned drawbacks can be obviated. In particular, the invention contemplates a semitrailer with which the axle load and the pressure exerted by the coupling can be set better and more quickly, and where the load is easily accessible to be unloaded. To this end, the semitrailer according to the invention is characterized by the features of claim 1.

By providing the opposite short sides with a truck coupling each, the semitrailer can be coupled with a truck in one of two opposite main driving directions as desired.

During transport, the truck can be coupled to the most heavily loaded side. With unloading, the truck can be driven around and the semitrailer can be placed with the correct short side to the unloading bay, for instance a dock shelter. After unloading the load, the truck can then again be placed on the most heavily loaded side. In this manner, in a transport route, for instance, the place where the rear, lighter load is to be unloaded need not be called at first.

By designing the truck couplings on the opposite sides so as to be substantially identical, the coupling system with the truck can have a simple design. In an advantageous manner, the truck coupling of the semitrailer is designed as a kingpin which can cooperate with a coupling disc on the truck. The truck couplings of the semitrailer are therefore preferably of the same type. Preferably, on the semitrailer, a male truck coupling is used, because these usually have a simpler construction.

Within this context, a semitrailer for road transport is understood to mean a semitrailer which is provided with a license number for allowing it on the public road.

Further advantageous embodiments of the invention are shown in the subclaims.

The invention will be explained in more detail with reference to a drawing, in which:
Fig. 1a shows a schematic side elevational view of a truck with a semitrailer according to the invention in a first main driving direction;
Fig. 1b shows a schematic top plan view of Fig. 1a;
Fig. 2a shows a schematic side elevational view of the truck with semitrailer of Fig. 1b where the truck has been driven around and where the main driving direction of the semitrailer has been reversed; and
Fig. 2b shows a schematic top plan view of Fig. 2a.

The drawings are only a schematic representation of a preferred embodiment of the invention which is shown by way of non-limiting exemplary embodiment. In the drawings, same or corresponding parts are designated by the same reference numerals.

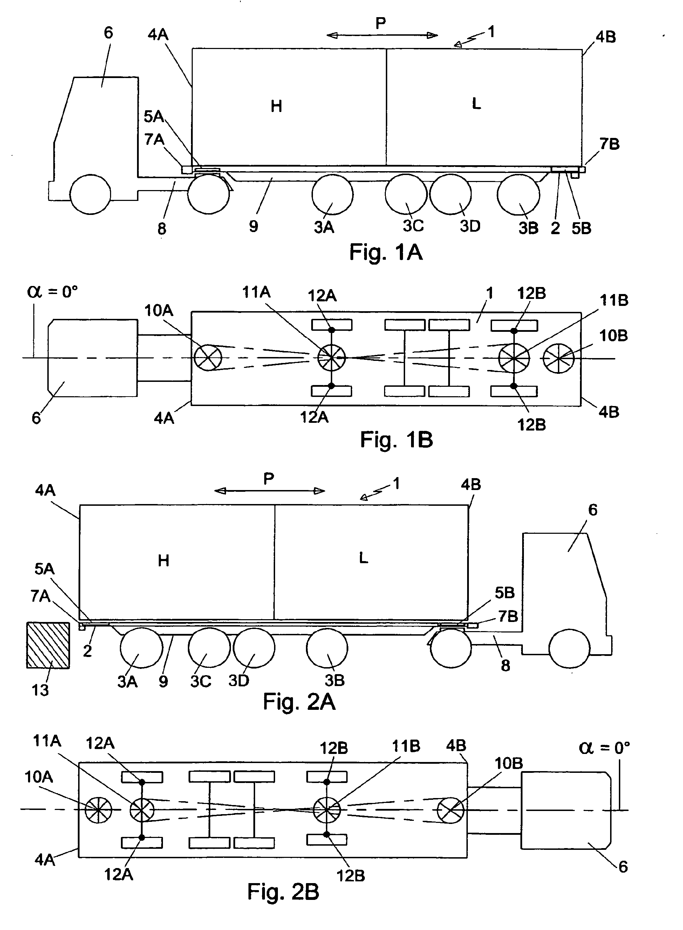

Figs. 1a and 1b show a side elevational view and top plan view, respectively, of a semitrailer 1 for normal transport on the public road. So, the semitrailer is allowed on the public road without load-dependent exemption. The semitrailer 1 comprises a loading platform 2 with four wheel sets 3. On a short side 4a of the semitrailer 1, a truck coupling 5a is provided for cooperation with a truck 6.

Semitrailer 1 is, on the opposite short side 4b, provided with an alternative truck coupling 5b for cooperation with the truck 6. The main driving direction, which is indicated with a double arrow P, is reversible.

Within this context, main driving direction is understood to mean a driving direction which the semitrailer has when it is coupled behind a truck moving forwards; in that case, the short side 4 of the semitrailer facing the truck 6 can be considered the front side of the truck. With the semitrailer 1, the front and rear side are reversible, as can be gathered from Figs. 2a and 2b.

The truck couplings 5a, 5b on the opposite sides 4a, 4b are designed as substantially identical kingpins.

Near the short sides 4a, 4b, the semitrailer 1 is provided with wheel sets 3a, 3b, which are here designed to be force-steerable, as will be explained in more detail hereinbelow. Alternatively, the wheel sets 3a, 3b may also be designed to be freely steerable or rigid.

The wheel sets 3a, 3b located near the short sides 4a, 4b are each movable with respect to the loading platform 2 between a position located nearer the edge 7a, 7b of the short sides 4a, 4b of the loading platform 2, in which position receipt of a rear part 8 of the truck 6 under the loading platform 2 is blocked, and a position located further from the edge 7a, 7b, in which position receipt of a rear part 8 of a truck 6 under the loading platform 2 is possible. In the Figs. 1, the wheel set 3b is shown in the first position and the wheel set 3a is shown in the second position. In the Figs. 2, the wheel set 3a is shown in the first position and the wheel set 3b is shown in the second position.

The wheel sets 3a, 3b located near the short sides 4a, 4b are designed so as to be movable in a coupled manner. In this exemplary embodiment, this is realized in the wheel sets 3a, 3 are coupled via a coupling beam 9.

The semitrailer 1 is provided with two rigid wheel sets 3c and 3d, respectively, near the center. The rigid wheel sets 3c, 3d may optionally be designed so as to be movable with respect to the loading platform, but are fixedly arranged in this exemplary embodiment.

Both truck couplings 5a, 5b are provided with steering means 10a, 10b for steering a force-steerable wheel set 3a, 3b located near the uncoupled truck coupling 5a, 5b on the basis of a pivotal angle realized between truck 6 and semitrailer 1 via a truck coupling 5a, 5b. In Figs. 1, the steering means 10a steer the force-steerable wheel set 3b, while, in Figs. 2, the steering means 10b steer the wheel set 3a. In the top plan view of Figs. 1b and 2b, it can be seen that the pivotal angle α is zero degrees.

The steering means are preferably designed mechanically, in particular as steering rods shown in dotted lines which extend from the turntables 10a, 10b cooperating with the kingpin to turntables 11b and 11a, respectively, of the force-steerable wheel set 3b and 3a, respectively. For easy reference, in Figs. 1b, 2b, each time, only one set of steering rods is shown. Of course, it is also possible to design the steering means to be electronic or hydraulic. In the embodiment shown here, the force-steerable wheel set located near the coupled short side 4 is not steered. Of course, it is possible to force-steer this force-steerable front wheel set as well.

The wheel sets 3a, 3b located near the opposite short sides 4a, 4b are each arranged pivotally about an upright axis with respect to the loading platform 2 via a lockable turntable 11a, 11b. In the exemplary embodiment shown here, each time, the front turntable 11 in the driving direction is locked, i.e. in Figs. 1, the turntable 11a is locked and the turntable 11b is released, while, in the Figs. 2, the turntable 11a is released and the turntable 11b is locked. In this exemplary embodiment, the locking of the turntables 11 is realized in that, in the first position of the wheel set 3, the turntables 11 are slid onto a guide rail which prevents rotation of the turntable, while, when the wheel set 3 is in the second position, the turntables 11 are clear of the guide and can rotate.

The wheels of the wheel sets 3a, 3b located near the opposite short sides 4a, 4b are arranged pivotally about an upright axis with respect to the loading platform 2 via lockable tie rod 12a, 12b. Here, the locking is designed such that the tie rods are released when the turntables 11 are locked. Alternatively, the wheel sets 3a, 3b can be arranged so as to be adjustable in height with respect to the loading platform 2 via lift axles. In such a case, the front wheel set 3 in driving direction can be lifted, instead of being made steerable via a tie rod.

The loading platform 2 of the semitrailer 1 shown in exemplary embodiment is part of a container chassis. The chassis is preferably provided with twistlocks with a center distance of forty feet for receiving a 40-foot container and with two sets of twistlocks for receiving two 20-foot containers on the chassis. Optionally, additional twistlocks may be provided for receiving rail boxes or 30-foot containers. Further, the chassis may be provided with twistlocks with a center distance of 42.5 or 45 feet for receiving a 45-foot container. If desired, the chassis may be provided with telescopic or collapsible parts or with end pieces or extensions to realize the desired center distance between the twistlocks.

Alternatively, the loading platform 2 may be part of a fixed superstructure, such as a container or tank superstructure. Preferably, such a container is provided with loading doors on the opposite short sides 4 of the semitrailer, and/or multiple successive loading compartments viewed in driving direction. In the case of a tank superstructure, these are multiple tank compartments in driving direction.

The wheels of the wheel sets 3 are preferably with disc brakes and the suspension of the wheels is provided with spring bellows having a double design in driving direction.

The wheel sets 3a, 3b support buffer beams, lighting units and license number plates. Of course, buffer beams, lighting units and license number plate holders may also be supported by the loading platform 2, for instance as a folding beam which can be adjusted between an upward or lying position on the one hand and a downward operative position on the other hand.

The main driving direction P of the semitrailer can be adjusted as follows between the direction shown in Figs. 1 and the direction shown in Figs. 2.

Fig. 1 shows that two 20-foot containers have been placed on the semitrailer 1. The front container in driving direction with the designation H is more heavily loaded than the rear container in driving direction with the designation L. During the transport route, first the heaviest container needs to be unloaded. Near the unloading platform 13, the truck 6 is uncoupled from the truck coupling 5a and the truck is driven around to the opposite short side 4b. Then, the truck is coupled to the opposite short side 4b and the semitrailer is placed against the unloading platform 13 with the short side 4a.

The semitrailer can be adjusted as follows from the position shown in Figs. 1 to the position shown in Fig. 2 in order to reverse the main driving direction.

The adjustable wheel sets 3a, 3b are braked. Then the loading platform 2 is unlocked with respect to the wheel sets 3a, 3b and it is, with the still coupled truck 6, moved with respect to the wheel sets 3a, 3b and brought into a neutral position (not shown). In this position, the wheel sets 3a, 3b are each so far removed from the kingpins 7a, 7b that the rear part 8 of the truck 6 can still just couple and uncouple. From the position shown in Fig. 1, the loading platform 2 moves to the right with respect to the wheel sets 3a, 3b.

In the neutral position, the wheel sets are here, in side elevational view, arranged symmetrically with respect to the center of the semitrailer. The neutral position is preferably stable, so that supporting legs can be avoided. Then, the truck 6 is uncoupled from the one kingpin 5a and, after driving the truck 6 around, it is coupled to the opposite kingpin 5b. With the truck 6, the loading platform 2 is then, in Fig. 2, moved to the right again into the position shown there. Then, the loading platform is fixed again with respect to the wheel sets, and the wheel sets 3a, 3b are released.

The semitrailer 1 can be built up by means of a chassis in a conventional manner. However, it is also possible to design the loading platform 2 as a stiff, light sandwich construction on which the wheel sets engage with the aid of plates. The movability of the wheel sets may, for instance, be realized by designing the sandwich construction of the loading platform to be corrugated on the bottom side and having the wheel sets cooperate with the loading platform via a correspondingly shaped corrugated plate. By choosing the direction of propagation of the corrugations so as to be transverse to the transport direction, the wheel set can then simply be moved in longitudinal direction of the vehicle.

## Claims

1. A semitrailer (1) for road transport, comprising a loading platform (2) with at least one wheel set (3a, 3b), and a truck coupling (5a) for cooperation with a truck provided on a short side (4a) of the semitrailer, wherein on the opposite short side (4b), the semitrailer is provided with an alternative truck coupling (5b) for cooperation with a truck (6), so that the main driving direction of the semitrailer is reversible, **characterized in that**, near the short sides (4a, 4b), wheel sets (3a, 3b) are provided, which are freely steerable wheel sets (3a, 3b) or force-steerable wheel sets (3a. 3b).

2. A semitrailer (1) according to claim 1, wherein the truck couplings (5a, 5b) on the opposite sides are designed to be substantially identical, preferably as kingpins.

3. A semitrailer (1) according to claim 1 or 2, wherein the wheel sets (3a, 3b) located near the short sides (4a, 4b) are each movable with respect to the loading platform (2) between a position located nearer the edge (7a, 7b) of the short side (4a, 4b) of the loading platform (2), in which position receipt of a rear part of a truck under the loading platform (2) is blocked, and a position located further from the edge (7a, 7b) of the short side (4a, 4b) of the loading platform (2), in which position receipt of a rear part (8) of a truck (6) under the loading platform (2) is possible.

4. A semitrailer (1) according to claim 3, wherein the wheel sets (3a, 3b) located near the short sides (4a, 4b) are designed so as to be movable in a coupled manner.

5. A semitrailer (1) according to any one of the preceding claims, wherein, near the center, at least one wheel set (3c, 3d) is provided, preferably one or more rigid wheel sets (3c, 3d).

6. A semitrailer (1) according to any one of the preceding claims, wherein, for both truck couplings (5a, 5b), steering means (10a, 10b) are provided for steering a force-steerable wheel set (3a, 3b) located near the uncoupled truck coupling (5a, 5b) on the basis of the pivotal angle realized between truck (6) and semitrailer (1) via a truck coupling (5a, 5b).

7. A semitrailer (1) according to any one of claims 1-6, wherein the wheel sets (3a, 3b) located near the opposite short sides are each arranged pivotally with respect to the loading platform via a lockable turntable (11a, 11b).

8. A semitrailer (1) according to any one of claims 1-7, wherein the wheels of wheel sets (3a, 3b) located near the opposite short sides (4a, 4b) are arranged pivotally with respect to the loading platform (2) via lockable tie rods (12a, 12b) and/or are arranged so as to be adjustable in height with respect to the loading platform (2) via lift axles.

9. A semitrailer (1) according to any one of the preceding claims, wherein the loading platform (2) is part of a container chassis.

10. A semitrailer (1) according to any one of the preceding claims 1-8, wherein the loading platform (2) is part of a fixed superstructure.

11. A semitrailer (1) according to any one of the preceding claims, wherein the braked wheels of the wheel sets are provided with brakes which have a substantially identical braking characteristic in both main driving directions, in particular disc brakes.

12. A semitrailer (1) according to any one of the preceding claims, wherein the semitrailer (1) is provided with a suspension which has a substantially identical spring characteristic in both main driving directions, in particular spring bellows having a double design.

## Patentansprüche

1. Sattelanhänger (1) für den Straßentransport, mit einer Ladeplattform (2) mit mindestens einem Radsatz (3a,3b), und mit einer an einer kurzen Seite (4a) des Sattelanhängers vorgesehenen Anhängerkupplung (5a) zum Zusammenwirken mit einem Zugfahrzeug, wobei an der gegenüberliegenden kurzen Seite (4b) der Sattelanhänger mit einer alternativen Anhängerkupplung (5b) zum Zusammenwirken mit einem Zugfahrzeug (6) versehen ist, so dass die Hauptantriebsrichtung des Sattelanhängers reversibel ist,
**dadurch gekennzeichnet, dass** nahe den kurzen Seiten (4a,4b) Radsätze (3a,3b) vorgesehen sind, die frei lenkbare Radsätze (3a,3b) oder zwangsweise lenkbare Radsätze (3a,3b) sind.

2. Sattelanhänger (1) nach Anspruch 1, bei dem die an gegenüberliegenden Seiten angeordneten Anhängerkupplungen (5a,5b) im Wesentlichen identisch ausgebildet sind, vorzugsweise in Form von Achszapfen.

3. Sattelanhänger (1) nach Anspruch 1 oder 2, bei dem die nahe den kurzen Seiten (4a,4b) angeordneten Radsätze (3a,3b) jeweils in Bezug auf die Ladeplattform (2) zwischen einer näher zu dem Rand (7a,7b) der kurzen Seite (4a,4b) der Ladeplattform (2) gelegenen Position, in welcher die Aufnahme eines rückwärtigen Teils eines Zugfahrzeugs unter der Ladeplattform (2) blockiert ist, und einer weiter von dem Rand (7a,7b) der kurzen Seite (4a,4b) der Ladeplattform (2) entfernten Position bewegbar sind, in welcher die Aufnahme eines rückwärtigen Teils (8) eines Zugfahrzeugs (6) unter der Ladeplattform (2) möglich ist.

4. Sattelanhänger (1) nach Anspruch 3, bei dem die nahe den kurzen Seiten (4a,4b) angeordneten Radsätze (3a,3b) zur miteinander gekoppelten Bewegung ausgebildet sind.

5. Sattelanhänger (1) nach einem der vorhergehenden Ansprüche, bei dem nahe der Mitte mindestens ein Radsatz (3c,3d) vorgesehen ist, vorzugsweise ein oder mehrere starre Radsätze (3c,3d).

6. Sattelanhänger (1) nach einem der vorhergehenden Ansprüche, bei dem für beide Anhängerkupplungen (5a,5b) Lenkvorrichtungen (10a, 10b) vorgesehen sind, um einen nahe der ausgekoppelten Anhängerkupplung (5a,5b) angeordneten zwangsweise lenkbaren Radsatz (3a, 3b) auf der Basis des zwischen dem Zugfahrzeug (6) und dem Sattelanhänger (1) gebildeten Schwenkwinkels über eine Anhängerkupplung (5a,5b) zu lenken.

7. Sattelanhänger (1) nach einem der Ansprüche 1-6, bei dem die nahe den einander gegenüberliegenden kurzen Seiten angeordneten Radsätze (3a,3b) jeweils in Bezug auf die Ladeplattform über einen verriegelbaren Drehtisch (11a,11b) schwenkbar angeordnet sind.

8. Sattelanhänger (1) nach einem der Ansprüche 1-7, bei dem die Räder von nahe den einander gegenüberliegenden kurzen Seiten (4a,4b) angeordneten Radsätzen (3a,3b) in Bezug auf die Ladeplattform (2) über verriegelbare Kuppelstangen (12a,12b) schwenkbar angeordnet sind und/oder derart angeordnet sind, dass sie über Hubachsen in Bezug auf die Ladeplattform (2) höhenverstellbar sind.

9. Sattelanhänger (1) nach einem der vorhergehenden Ansprüche, bei dem die Ladeplattform (2) Teil eines Behälter-Fahrgestells ist.

10. Sattelanhänger (1) nach einem der Ansprüche 1-8, bei dem die Ladeplattform (2) Teil einer festen Überstruktur ist.

11. Sattelanhänger (1) nach einem der vorhergehenden Ansprüche, bei dem die bremsbaren Räder der Radsätze mit Bremsen versehen sind, die im Wesentlichen identische Bremseigenschaften in beiden Hauptfahrrichtungen aufweisen, wobei die Bremsen insbesondere Scheibenbremsen sind.

12. Sattelanhänger (1) nach einem der vorhergehenden Ansprüche, wobei der Sattelanhänger (1) mit einer Aufhängung versehen ist, die in beiden Hauptfahrrichtungen im Wesentlichen identische Federeigenschaften hat, wobei die Aufhängung insbesondere in Form doppelt ausgestalteter Federbälge vorgesehen ist.

## Revendications

1. Semi-remorque (1) pour le transport routier, comprenant une plateforme de chargement (2) avec au moins un train de roues (3a, 3b), et un attelage de camion (5a) pour une coopération avec un camion prévu d'un côté court (4a) de la semi-remorque, dans laquelle, du côté court (4b) opposé, la semi-remorque est pourvue d'un autre attelage de camion (5b) pour une coopération avec un camion (6), de sorte que la direction d'entraînement principale de la semi-remorque est réversible, **caractérisée en ce que**, près des côtés courts (4a, 4b), des trains de roues (3a, 3b) sont prévus, lesquels sont des trains de roues (3a, 3b) pouvant être braqués librement ou des trains de roues (3a, 3b) pouvant être braqués de force.

2. Semi-remorque (1) selon la revendication 1, dans laquelle les attelages de camion (5a, 5b) des côtés opposés sont conçus pour être sensiblement identiques, de préférence en tant que pivots d'attelage.

3. Semi-remorque (1) selon la revendication 1 ou 2, dans laquelle les trains de roues (3a, 3b) situés près des côtés courts (4a, 4b) sont mobiles chacun par rapport à la plateforme de chargement (2) entre une position située plus près du bord (7a, 7b) du côté court (4a, 4b) de la plateforme de chargement (2), à laquelle position la réception d'une partie arrière d'un camion sous la plateforme de chargement (2) est bloquée, et une position située plus loin du bord (7a, 7b) du côté court (4a, 4b) de la plateforme de chargement (2), à laquelle position la réception d'une partie arrière (8) d'un camion (6) sous la plateforme de chargement (2) est possible.

4. Semi-remorque (1) selon la revendication 3, dans laquelle les trains de roues (3a, 3b) situés près des courts côtés (4a, 4b) sont conçus de manière à être mobiles d'une manière accouplée.

5. Semi-remorque (1) selon l'une quelconque des revendications précédentes, dans laquelle, près du centre, au moins un train de roues (3c, 3d) est prévu, de préférence un ou plusieurs trains de roues (3c, 3d) rigides.

6. Semi-remorque (1) selon l'une quelconque des revendications précédentes, dans laquelle, pour les deux attelages de camion (5a, 5b), des moyens de braquage (10a, 10b) sont prévus pour braquer un train de roues (3a, 3b) pouvant être braqué de force situé près de l'attelage de camion (5a, 5b) non accouplé sur la base de l'angle de pivotement formé entre le camion (6) et la semi-remorque (1) par l'intermédiaire d'un attelage de camion (5a, 5b).

7. Semi-remorque (1) selon l'une quelconque des revendications 1 à 6, dans laquelle les trains de roues (3a, 3b) situés près des côtés courts opposés sont agencés chacun de manière pivotante par rapport à la plateforme de chargement par l'intermédiaire d'un plateau tournant (11 a, 11 b) pouvant être verrouillé.

8. Semi-remorque (1) selon l'une quelconque des revendications 1 à 7, dans laquelle les roues des trains de roues (3a, 3b) situés près des côtés courts (4a, 4b) opposés sont agencées de manière pivotante par rapport à la plateforme de chargement (2) par l'intermédiaire de biellettes de direction (12a, 12b) pouvant être verrouillées et/ou sont agencées de manière à être ajustables en hauteur par rapport à la plateforme de chargement (2) par l'intermédiaire d'essieux relevables.

9. Semi-remorque (1) selon l'une quelconque des revendications précédentes, dans laquelle la plateforme de chargement (2) est une partie d'un châssis de conteneur.

10. Semi-remorque (1) selon l'une quelconque des revendications 1 à 8 précédentes, dans laquelle la plateforme de chargement (2) est une partie d'une superstructure fixe.

11. Semi-remorque (1) selon l'une quelconque des revendications précédentes, dans laquelle les roues freinées des trains de roues sont pourvues de freins qui ont une caractéristique de freinage sensiblement identique dans les deux directions d'entraînement principales, en particulier des freins à disque.

12. Semi-remorque (1) selon l'une quelconque des revendications précédentes, dans laquelle la semi-remorque (1) est pourvue d'une suspension qui a une caractéristique d'amortissement sensiblement identique dans les deux directions d'entraînement principales, en particulier des soufflets élastiques ayant une conception double.
